# EUROPEAN PATENT SPECIFICATION

(11) **EP 4 573 470 B1**
(45) Date of publication and mention of the grant of the patent: **29.07.2026**
(21) Application number: 23722562.8
(22) Date of filing: 27.04.2023
(51) Int. Cl.: G06F 21/57, G06F 21/44, H04L 9/32, G06F 21/60, H04L 9/40, H04L 9/00, G06F 21/53, H04L 9/08

(54) **APPARATUS AND METHOD FOR AUGMENTING SECURE CHANNEL HANDSHAKES WITH ATTESTATION**
VORRICHTUNG UND VERFAHREN ZUR ERWEITERUNG SICHERER KANALHANDSHAKE MIT BESTÄTIGUNG
APPAREIL ET PROCÉDÉ D'AUGMENTATION D'ÉTABLISSEMENT DE LIAISON DE CANAL SÉCURISÉ AVEC ATTESTATION

(43) Date of publication of application: 25.06.2025
(73) Proprietor: Huawei Technologies Co., Ltd., Shenzhen, Guangdong 518129 (CN)
(72) Inventor: SOVIO, Sampo, 16440 Kista (SE); NIEMI, Arto, 16440 Kista (SE)
(74) Representative: Gill Jennings & Every LLP
(86) International application number: PCT/EP2023/061111
(87) International publication number: WO 2024/223043

(56) References cited:
- WO-A1-2022/164441
- US-A1- 2017 041 147
- US-A1- 2022 038 272

## Description

### TECHNICAL FIELD

The aspects of the disclosed embodiments relate generally to secure network communications and more particularly to remote attestation.

### BACKGROUND

An ever-increasing volume of transactions performed over the internet, many of which are commercial and financial in nature, has led to a need for reliable and secure network communication protocols, also referred to as handshakes. This need is often answered with secure channels such as the ubiquitous transport layer security (TLS) or other standardized secure channel protocols.

Secure channel protocols, such as TLS, use cryptography to ensure privacy and integrity of data exchanged over computer networks, and to provide mutual authentication of the endpoints based on digital certificates. However, these protocols do not easily provide any assurances of integrity of the software and hardware platforms on which the endpoints of the secure channels are executing.

Remote attestation (RA) is a technology used to ensure integrity of computer platforms or endpoints and operates by transmitting attestation evidence from one endpoint, the attester, to a second endpoint, the verifier. The verifier can then examine the attestation evidence to establish a level of trust between the endpoints.

Developing new secure channel protocols or modifying existing protocols to include remote attestation can be expensive and difficult to distribute to the many endpoints and data centers where it is needed. Unfortunately, conventional methods for integrating RA into existing secure channel protocols, such as TLS, require changes to the message formats and/or changes to the implementation code. Thus, adding RA into existing secure channel implementations using these conventional approaches requires a large investment of time and developer resources, thereby creating a barrier to their adoption and use.

Thus, there is a need for improved apparatus and methods capable of augmenting existing secure channel handshakes without the need for costly modifications to the implementation code. Accordingly, it would be desirable to provide methods and apparatus that addresses at least some of the problems described above. US2022/038272A1 discloses methods and systems for attestation of a device running layered software.

### SUMMARY

The aspects of the disclosed embodiments are directed to apparatus and methods for augmenting secure channel handshakes with attestation. The aspects of the disclosed embodiments leverage properties of discrete logarithm problem (DLP) based digital signature algorithms, referred to herein as additive sub-keys, to add remote attestation to standardized secure channel handshakes in a way that conforms to defined message structures and avoids modification of existing secure channel implementations. The use of unmodified secure channel implementations allows existing software images, such as those available in cloud data centers and mobile communication devices, to be employed. The costs of development and distribution of custom secure channel implementations is avoided.

According to a first aspect, the above and further implementations and advantages are obtained by an apparatus including a processor communicatively coupled with a memory. The memory includes program instructions that when executed by the processor cause the apparatus to transmit a create secure channel request message over a computer network, and to receive one or more create secure channel response messages from the computer network. The processor generates a transcript based on one or more of the create secure channel request message and the one or more create secure channel response messages, and collects one or more attestation measurements. The one or more attestation measurements represent a current state of the apparatus. The processor computes an attestation private key based on a device private key and the one or more attestation measurements, generates a first attestation signature by signing the transcript using the attestation private key, and transmits a first identity certificate and the first attestation signature over the computer network.

In a possible implementation form, execution of the program instructions by the processor causes the apparatus to generate the attestation private key by generating a measurement hash based at least in part on the attestation measurements, generating an attestation hash based on the measurement hash and an order of a group generator point, and computing the attestation private key by adding the attestation hash to the device private key modulo the order of the group generator point. Incorporating both the device private key and attestation information into the attestation key allows the attestation signature to verify that the endpoint is in possession of the device private key and to verify integrity of the endpoint's platform.

In a possible implementation form, the attestation measurements include one or more of a secure boot state of the apparatus, a hash of a boot image of the apparatus, and a hash of an application code of the apparatus. Including these measurements in the attestation measurements allows the attestation signature to verify the integrity of software executing on the endpoint.

In a possible implementation form, the apparatus includes a rich execution environment and a secure execution environment. The secure execution environment includes one or more of a trusted execution environment and a hardware security module (HSM). The secure execution environment is configured to protect the device private key, generate the attestation private key, and generate the attestation signature. Inclusion of a secure execution environment provides a higher level of trust in the attestation measurements and generated signatures.

In a possible implementation form, the secure execution environment includes one or more of a software-based hardware security module (HSM) or a trusted execution environment. Use of a software based secure execution environment simplifies deployment in virtual environments.

In a possible implementation form, the one or more create secure channel response messages includes a second identity certificate and a second attestation signature. The apparatus is further configured to verify the second attestation signature based on a pre-defined reference hash. Receiving and verifying a second attestation signature provides the client endpoint with an increased level of trust in integrity of the server.

In a possible implementation form, the apparatus is configured to verify the second attestation signature by extracting a public key from the second identity certificate; generating a transcript based on one or more of the create secure channel request message and the one or more create secure channel response messages; computing an attestation public key based on the extracted public key, the pre-defined reference hash, and the group generator point; and validating the second attestation signature based on the attestation public key. Verifying the second attestation signature based on the extracted public key and a hash of attestation evidence improves trust of the server.

According to a second aspect, the above and further implementations and advantages are obtained by a method for augmenting secure channel handshakes with attestation. In one embodiment the method includes transmitting a create secure channel request message over a computer network; receiving one or more create secure channel response messages from the computer network: generating a transcript based on one or more of the create secure channel request message and the one or more create secure channel response messages; and collecting one or more attestation measurements. The one or more attestation measurements represent a current state of a communications apparatus. The method further includes computing an attestation private key based on a device private key and the one or more attestation measurements; generating a first attestation signature by signing the transcript using the attestation private key; and transmitting a first identity certificate and the first attestation signature over the computer network.

In a possible implementation form, the generation of the attestation private key includes generating a measurement hash based at least in part on the attestation measurements; generating an attestation hash based on the measurement hash and an order of a group generator point; and computing the attestation private key by adding the attestation hash to the device private key modulo the order of the group generator point. Incorporating both the device private key and attestation information into the attestation key allows the attestation signature to verify that the endpoint is in possession of the device private key and to verify an integrity of the endpoint's platform.

In a possible implementation form, the one or more create secure channel response messages comprises a second identity certificate and a second attestation signature. The method is further configured to verify the second attestation signature based on a pre-defined reference hash, wherein the pre-defined reference hash represents a hash of known good attestation measurements. Receiving and verifying a second attestation signature provides the client endpoint with an increased level of trust in integrity of the server.

In a possible implementation form, verifying the second attestation signature includes extracting a public key from the second identity certificate; generating a transcript based on one or more of the create secure channel request message and the one or more create secure channel response messages; computing an attestation public key based on the public key and a pre-defined reference hash; and validating the second attestation signature based on the attestation public key. Verifying the second attestation signature based on the extracted public key and a hash of attestation evidence improves trust of the server.

According to a third aspect, the above and further implementations and advantages are obtained by a method for augmenting secure channel handshakes with attestation. In one embodiment the method includes receiving a create secure channel request message from a computer network; transmitting one or more create secure channel response messages over the computer network; receiving from the computer network an identity certificate and an attestation signature; generating a transcript based on one or more of the create secure channel request messages and the one or more create secure channel response messages; extracting a public key from the identity certificate; computing an attestation public key based on the extracted public key and a pre-defined reference hash; and validating the attestation signature based on the attestation public key and the transcript. When the attestation signature is valid, the secure channel is set up. When the attestation signature is invalid, the secure channel is denied.

In a possible implementation form, the pre-defined reference hash includes one or more pre-defined reference hashes, and when the attestation signature is invalid the method further includes selecting the next reference hash from the one or more pre-defined reference hashes; repeating the compute attestation key and validating the attestation signature steps for each pre-defined reference hash in the one or more pre-defined reference hashes until the attestation signature is validated or all pre-defined reference hashes in the one or more pre-defined reference hashes has been invalidated. Using multiple reference hashes to validate an endpoint adds flexibility to the attestation process.

In a possible implementation form, the one or more pre-defined reference hashes are embedded in a digital certificate, and the digital certificate is received from the computer network. Embedding reference hashes into the client endpoint's identity certificate provides a useful means for management and distribution of reference hashes.

According to a fourth aspect, the above and further implementations and advantages are obtained by a computer program product including non-transitory computer program instructions that when executed by a processor are configured to cause the processor to perform the method according to the disclosed embodiments. The computer program product facilitates distribution of the above-described methods to various computing apparatuses.

These and other aspects, implementation forms, and advantages of the exemplary embodiments will become apparent from the embodiments described herein considered in conjunction with the accompanying drawings. It is to be understood, however, that the description and drawings are designed solely for purposes of illustration and not as a definition of the limits of the disclosed invention, for which reference should be made to the appended claims. Additional aspects and advantages of the invention will be set forth in the description that follows, and in part will be obvious from the description, or may be learned by practice of the invention. Moreover, the aspects and advantages of the invention may be realized and obtained by means of the instrumentalities and combinations particularly pointed out in the appended claims.

### BRIEF DESCRIPTION OF THE DRAWINGS

In the following detailed portion of the present disclosure, the invention will be explained in more detail with reference to the example embodiments shown in the drawings, in which like references indicate like elements and:
Figure 1 illustrates a block diagram of an exemplary computing apparatus configured to augment secure channel protocols with remote attestation incorporating aspects of the disclosed embodiments;
Figure 2 illustrates a flow chart depicting an exemplary method for generating an attestation signature, incorporating aspects of the disclosed embodiments;
Figure 3 illustrates a flow chart depicting an exemplary method for validating an attestation signature, incorporating aspects of the disclosed embodiments;
Figure 4 illustrates a flowchart depicting an exemplary method for augmenting the client side of a secure channel handshake with attestation, incorporating aspects of the disclosed embodiments;
Figure 5 illustrates a block diagram depicting an exemplary system configured to augment secure channel handshakes with attestation, incorporating aspects of the disclosed embodiments;
Figure 6 illustrates a flowchart depicting an exemplary method for augmenting the server side of a secure channel handshake with attestation, incorporating aspects of the disclosed embodiments.

### DETAILED DESCRIPTION OF THE DISCLOSED EMBODIMENTS

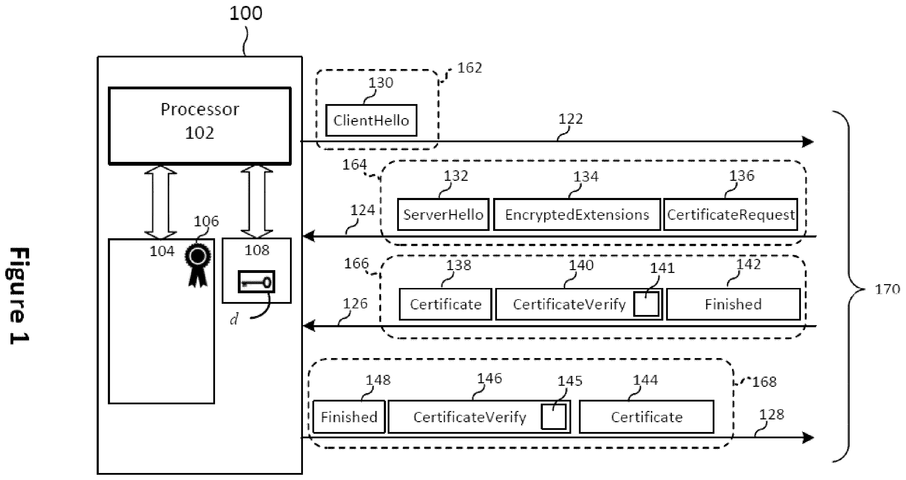

Figure 1 illustrates a block diagram of an exemplary apparatus 100 configured to augment secure channel handshakes with remote attestation incorporating aspects of the disclosed embodiments. The exemplary apparatus 100 of the disclosed embodiments generally comprises a computing apparatus 100 configured to exploit properties of additive sub-keys to provide remote attestation during secure channel establishment in a manner that conforms to standardized secure channel protocols without requiring modification of currently available secure channel implementations. Among other benefits, the use of the herein disclosed novel additive sub-key formulation, referred to herein as attestation keys, allows remote attestation to be included in standard secure channel protocols in a way that conforms to existing message formats and avoids the need to modify currently available implementations. These improvements and advantages are obtained in part by employing attestation keys for generation of and verification of information exchanged during a secure channel handshake.

Referring to Figure 1, in one embodiment the exemplary apparatus 100 comprises a processor 102 communicatively coupled to a memory 104. The memory 104 includes program instructions that when executed by the processor 102 cause the apparatus 100 to transmit a create secure channel request message 122 over a computer network 170; receive one or more create secure channel response messages 124, 126 from the computer network 170; generate a transcript based on one or more of the create secure channel request message 122 and the one or more create secure channel response messages 124, 126; and collect one or more attestation measurements *m*₁, *m*₂, ... . The one or more attestation measurements represent a current state of the apparatus 100.

An attestation private key *dₐ* is computed based on a device private key *d* and the one or more attestation measurements *m*₁, *m*₂, ... . A first attestation signature 145 is generated by signing the transcript using the attestation private key *dₐ* and a first identity certificate 144 and the first attestation signature 145 are transmitted over the computer network 170.

The aspects of the disclosed embodiments augment a secure channel establishment protocol, also referred to herein as a secure channel handshake, with remote attestation. Embodiments of the exemplary computing apparatus 100 are configured to provide remote attestation in a fashion that conforms to existing secure channel messaging protocols and that is supported, without modification, by available secure channel software implementations.

The apparatus 100 may be any desired type of computing apparatus or communications apparatus including but not limited to a mobile communications device such as a smartphone, wearable, or tablet. In certain embodiments the apparatus 100 may be a personal computing apparatus such as a laptop or other type of personal computing device, a server apparatus such as those used in cloud computing data centers, or any desired computing apparatus that includes a processor a memory and a means for communicating over a computer network.

As is shown in the example of Figure 1, the processor 102 is communicatively coupled to the memory 104 and is configured to read and perform operations on data stored in the memory 104. In certain embodiments the apparatus 100 may also include a system storage (not shown) such as a disk drive or solid-state disk configured to provide high-capacity long term storage capabilities.

The processor 102 can generally comprise any suitable processing device including but not limited to a high-performance multi-core computer processing device such as those used in large cloud computing data centers, a multi-core or single core microprocessor such as those used in workstations and laptop computers, a processing device embedded in a system such as a system on a chip (SoC), or any suitable or specialized processing device such as those used in mobile communications devices, telecommunications equipment, and smart devices configured for the internet of things (IoT).

The memory 104 may include any desired type or combination of computer accessible memory, such as random-access memory (RAM), read-only memory (ROM), or other suitable types of volatile and non-volatile memory.

A computer network 170 is communicatively coupled to the apparatus 100 and is configured to exchange data and messages between the apparatus 100 and other endpoints or nodes in the computer network 170. The computer network 170 may be any suitable type of computer network configured to allow an apparatus 100 or other computerized device, also referred to herein as a network node, to share information and resources. The computer network 170 may include any desired type of physical media such as wired, optical, or wireless media.

Wired networks include any desired type of computer network configured to use electric signals to carry information over network links, such as links constructed of conductive wires. Optical networks include any type of network configured to use optical signals to carry information over network links, such as links constructed of fiberoptic materials. Wireless networks include any suitable type of computer network that uses radio signals to transmit information through air, such as WIFI, Bluetooth, long term evolution (LTE), or other wireless broadband communication mechanisms.

System software included in the computing apparatus 100 may, when desired, provide a network communication stack such as an internet protocol suite commonly referred to as TCP/IP (transmission control protocol/internet protocol) stack. The network communication stack is configured to provide a reliable, connection-oriented transport service.

In today's distributed computing environment, the need for network security is well understood. To satisfy this need, various secure channel protocols or handshakes have been developed to protect information being transmitted across a computer network, such as the computer network 170. These secure channel protocols employ cryptography to provide privacy, integrity, and authenticity for information being exchanged over computer networks. One such protocol is the ubiquitous transport layer security (TLS) protocol developed and standardized under various requests for comment (RFC) by the internet engineering task force (IETF). The latest of which is designated TLS 1.3.

As an aid to understanding, certain features of the embodiments disclosed herein will be described with reference to the TLS protocol. However, those skilled in the art will readily recognize that the disclosed embodiments are not so limited and may be advantageously employed in any suitable secure channel protocol that includes a certificate verification or other type of message that incorporates a digital signature.

A secure channel typically has two endpoints. The endpoint initiating establishment of the secure channel is referred to herein as the client endpoint or just the client. When initiating a secure channel handshake, the client transmits a request to create a secure channel to the endpoint to which a connection is desired. The endpoint receiving the create secure channel request is referred to herein as the server endpoint or just the server. When a secure channel is successfully created it creates a bi-directional connection between the client and the server.

In one embodiment, the apparatus 100 includes a secure execution environment 108 configured to protect cryptographic operations, confidential data such as key material 110, and to provide additional trust for secure operations such as collecting attestation measurements. The secure execution environment 108 may be any suitable type of secure or trusted execution environment, such as but not limited to, a trusted execution environment (TEE), a trusted application (TA), a secure enclave, a trusted platform module (TPM), a trusted bootloader, or other suitably secure component. When desired, the secure execution environment 108 may include a hardware security module (HSM) or software based HSM configured to protect confidential key material and cryptographic operations.

When desired, a signature generation application may be included in the secure execution environment 108. The signature generation application may be configured to sign data passed into the secure execution environment 108 by application software running for example in a rich execution environment. The signature generation application may also be configured to protect confidential information such as a device private key d or other confidential key material. Optionally the signature generation module may be implemented as a hardware component such as a hardware security module (HSM) or implemented as a software component such as a software HSM, trusted execution environment, or other suitably secure software cryptographic module.

The attestation module is configured to generate trusted measurements of the system and application software, such as a transport layer security (TLS) implementation. The secure execution environment 108 may include any desired type of secure execution environment such as a trusted execution environment (TEE), a trusted application (TA), a trusted platform module (TPM), a trusted bootloader, or other desired type of suitably trusted module.

As used herein the term "public-private key pair" generally refers to a pair of keys used with an asymmetric cryptographic algorithm where data that is encrypted with one key from the public-private key pair may be decrypted only with the corresponding other key from the public-private key pair. For example, data encrypted with the private key can be decrypted only with the corresponding public key from the same public-private key pair.

Security of various asymmetric cryptography based digital signature algorithms, such as the widely used elliptic-curve digital signature algorithm (ECDSA) and the Edwards-curve digital signature algorithm (EdDSA), assume that the discrete logarithm problem (DLP) is exponentially hard to solve in terms of group size. As an aid to understanding, exemplary embodiments of the augmented secure channel protocols disclosed herein are described with reference to an elliptic-curve digital signature algorithm (ECDSA).

As used herein, the phrase "signing a data block using a key," or "creating a signature over a data block using a key" refers to the process of generating a digital signature for a data block using a particular encryption key. A digital signature over a data block *t* generated with a key *d* is represented herein using the notation: {*t*}*_{d},* where *t* is the data block and *d* is the signing key. The encryption key may for example be the private key from a public-private key pair. One common approach for generating a digital signature is to create a digest of the data block by computing a cryptographic hash of the data block. The digest is then encrypted with the encryption key and the resulting cyphertext becomes the digital signature. Validation of the digital signature may be accomplished by decrypting the digital signature using the public key, and then comparing the decrypted value to a newly created hash of the data block.

It will be appreciated that certain advantages of the disclosed embodiments are achieved by leveraging certain properties of DLP based cryptographic algorithms. The primary property of interest herein is referred to as additive sub-keys. As a non-limiting example, the following discussion provides an overview of additive sub-key construction and usage illustrated with the ECDSA.

Construction of additive sub-keys begins with selection of a base private key *d* and a group generator point *P.* In the following discussion the private key *d* and group generator point *P* are based on an ECDSA. The corresponding base public key *dP* is obtained using elliptic curve scalar multiplication to multiply the group generator point *P* by the base private key *d*.

As is known in the art, elliptic curve scalar multiplication, also referred to as elliptic curve point multiplication, is the operation of successively adding, using elliptic curve point addition, a point along an elliptic curve to itself, where the scalar value defines how many times the addition is performed.

There are two types of addition used in the cryptographic operations described herein, basic integer or scalar addition and group operations. When adding two scalar values, such as when adding the base private key *d* and a random integer *h,* standard integer addition is used to create the sum *d + h.* When adding points from a finite group, the corresponding group operation is applied. For example, in the case of ECDSA when adding the base public key *dP* and a sub-public key *hP,* elliptic curve point addition is used to generate the sum *dP + hP.* Both operations are represented herein by a plus '+' sign. Those skilled in the art will readily distinguish between these two types of addition based on the context.

It can be shown that for any random integer *h* between zero and an integer value *n*, 0 < *h* < *n*, where n is the order of the group generator point *P*, the ordered pair [*d + h,* (*d + h*)*P*] forms a valid public-private key pair, where *d* is a base private key, *d* +h is a sub-private key, and (d + *h*)*P* is the corresponding sub-public key. The ordered pair [*d + h,* (*d + h*)*P*] forms a valid additive sub-key pair. For reasons that will be discussed further below, the sub-public key (*d + h*)*P* may be referred to herein as an attestation public key, and the sub-private key (*d + h*) may be referred to herein as the attestation private key.

Generation of a sub-public key (*d + h*)*P* may be accomplished by first adding the base private key *d* with the random number *h* to get a sub-private key *d + h.* The sub-public key (*d + h*)*P* may then be generated by multiplying the group generator point *P* by the sub-private key *d* + *h.* Alternatively, the sub-public key (*d + h*)*P* may be generated by multiplying the group generator point *P* by the random number *h* to produce an intermediate key *hP.* The sub-public key (*d + h*)*P* may then be computed by adding the base public key *dP* to the intermediate key *hP,* which may be illustrated in equation form as: (*d + h*)*P* = *dP* + *hP.*

The exemplary computing apparatus 100 employs the above-described properties of additive sub-keys to augment existing secure channel protocols with remote attestation in a way that is consistent with existing secure channel protocols and that can be supported using existing secure channel implementations. The use of existing secure channel implementations, without modification, allows the embodiments disclosed herein to be employed on standard software images, such as software images available in cloud computing data centers and mobile communications devices, thereby removing barriers to deployment and reducing implementation costs.

When a secure channel is required, the apparatus 100 transmits a create secure channel request message 122 over the computer network 170 to a desired server endpoint (not shown). The server endpoint may be any desired service such as a banking application, online store, or other site where network security is desirable. When TLS is used, the create secure channel message takes the form of a ClientHello message 130.

In the illustrated embodiment, one or more create secure channel response messages 124, 126 are received by the apparatus 100 from the computer network 170. Continuing with the TLS example, the one or more create secure channel response messages 124, 126 may include a ServerHello message 132, an EncryptedExtensions message 134, a CertificateRequest message 136, a Certificate message 138 containing an identity certificate representing the identity and public key of the server, a CertificateVerify message 140, and a Finished message 142. As will be discussed further below, the Certificate Verify message 140 includes a digital signature 141 over a known set of data. In a conventional secure channel protocol, this signature may be used to verify that the server endpoint is in possession of the private key corresponding to the server certificate 138.

A transcript is generated, where the transcript includes data known to both endpoints of the secure channel, i.e., known to both the apparatus 100 and the server endpoint. In certain embodiments, the transcript may be based on one or more of the create secure channel request message 122, and the one or more create secure channel response messages 124, 126. A non-limiting example of a suitable transcript is defined by the TLS protocol and includes a running hash of messages exchanged in the handshake.

Attestation measurements *m*₁, *m*₂, ..., are generated where the attestation measurements *m*₁, *m*₂, ... represent a state of the computing apparatus. These measurements allow a verifier to ensure that the integrity of the apparatus 100 and a software image currently executing on the apparatus 100 has not been compromised. Suitable attestation measurements include measurements such as a secure boot state, boot image hashes, a kernel hash, a hash of the TLS endpoint application's binary code, and other similar security relevant metrics. In one embodiment the attestation measurements *m*₁, *m*₂, ..., may be created by a trusted co-processor 108 or trusted platform module (TPM) based on a measured boot process or measurement of an application code. In the apparatus 100 the secure execution environment 108 may be configured to reliably generate measurements of applications or other information useful for ensuring integrity of an endpoint.

In conventional secure channel protocols, such as the TLS protocol, the transcript is signed with a device private key *d*, thereby providing proof the endpoint is in possession of the correct private key *d*. In the embodiments disclosed herein the device private key *d* is replaced in the secure channel handshake with an attestation private key *dₐ,* where the attestation private key *dₐ* is an additive sub-private key based on both the device private key *d* and the attestation measurements *m*₁, *m*₂, ... . Thus, validation of a signature created with the attestation private key *dₐ* verifies that the endpoint is in possession of the device private key *d*, and that the attestation evidence is correct. An attestation signature 145 is generated by signing the transcript using the attestation private key *dₐ*. This attestation signature 145 is then transmitted along with the device's identity certificate 106 to the server endpoint where it may be used to establish trust in the apparatus 100.

Continuing with the TLS example, the device's identity certificate 106 and attestation signature 145 may be transmitted during the TLS handshake using a Certificate message 144, followed by a Certificate Verify message 146, and finally a Finished message 148. The attestation signature 145, which includes the remote attestation information, may be included in the Certificate Verify message 146 without any modification to the standard TLS Certificate Verify message.

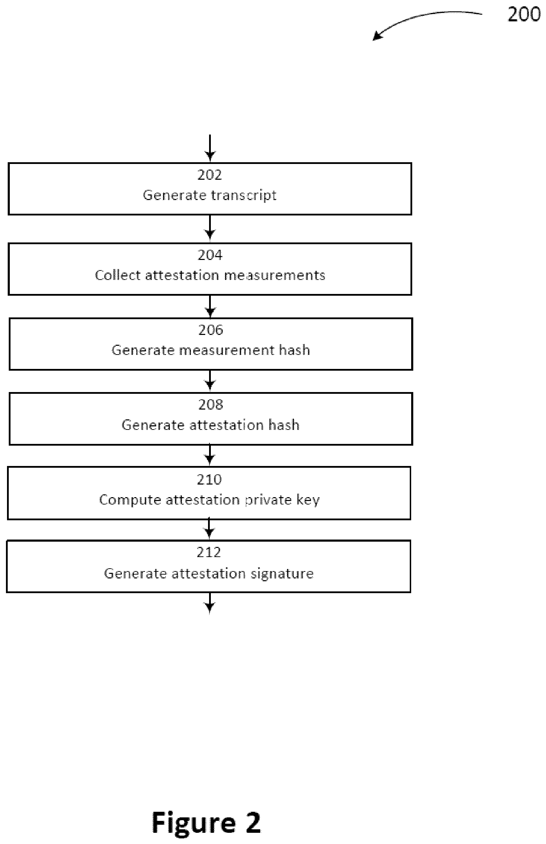

Figure 2 illustrates a flow chart depicting an exemplary method 200 for generating an attestation signature incorporating aspects of the disclosed embodiments. The exemplary method 200 is appropriate for computing an attestation private key *dₐ* and generating the attestation signature 145 described above and with reference to Figure 1.

The exemplary method 200 begins by generating 202 a transcript based on data available to both endpoints in the secure channel handshake. The transcript may for example be a running hash of messages exchanged during the handshake such as the transcript defined by the TLS handshake.

Attestation measurements *m*₁, *m*₂, ... are then collected 204. Beneficially, the collected attestation measurements *m*₁, *m*₂, ... are configured to provide proof integrity of the apparatus 100 and software executing thereon have not been compromised. A measurement hash *hₘ* is generated 206 based on the attestation measurements *m*₁, *m*₂, ... . An attestation hash *hₐ* is generated 208 by mapping, such as with a modulo operation, the measurement hash *hₘ* onto an interval [1, *n* - 1] , where *n* is an order of the group generator point *P*.

An attestation private key *dₐ* may be computed 210 by adding a device private key, such as the private key d associated with the apparatus 100, with the attestation hash *hₐ* modulo an order of the group generator point *P*. The attestation private key *dₐ* may be expressed in equation form as: *dₐ* = (*d* + *hₐ*)%*n,* where *n* is an order of the group generator point *P*. The attestation signature is then generated 212 by signing the transcript with the attestation private key *dₐ*.

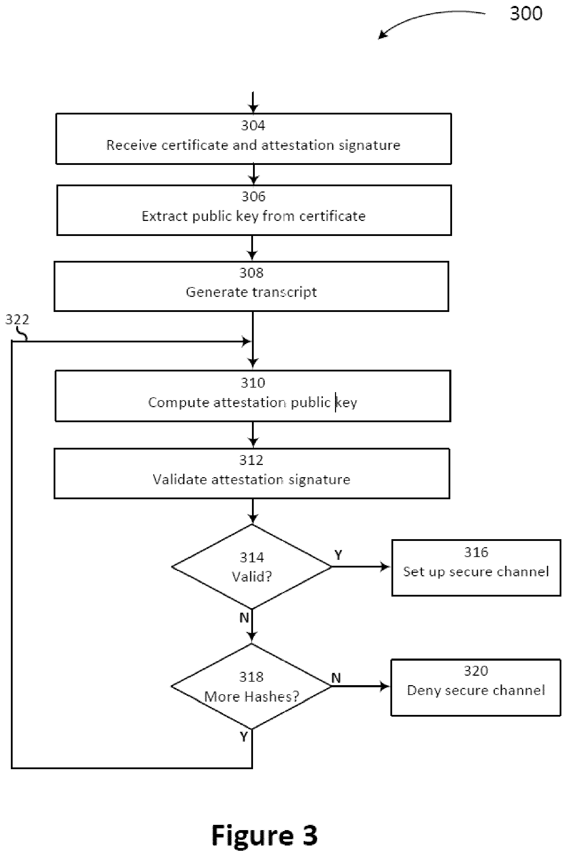

Figure 3 illustrates a flow chart depicting an exemplary method 300 for validating an attestation signature incorporating aspects of the disclosed embodiments. The exemplary method 300 of the disclosed embodiments is appropriate for use in the apparatus 100 described above or in any suitable node on a computer network where it is desirable to ensure the identity and integrity of an endpoint while setting up a secure communications channel.

The exemplary method 300 begins by receiving 304 a certificate and an attestation signature during a secure channel handshake. The received certificate may be any suitable digital certificate such as a conventional identity certificate generated by a trusted certificate authority. In certain embodiments the received certificate may be an identity certificate signed by a trusted certificate authority where the identity certificate binds a public key, associated with the identified entity, with the identity of the certificate holder. Optionally, additional information may be embedded in the received certificate.

For example, the additional information may include one or more reference hashes configured to aid remote attestation. The received attestation signature may be an attestation signature, such as the attestation signature described above, where the attestation signature is generated based on an attestation key and one or more attestation measurements.

As used herein, the term "embedding information in a certificate" refers to including the information in the certificate body and incorporating the information into the certificate's signature. Thus, by embedding information into a certificate, the certificate's signature ensures integrity of the embedded information.

A public key *D* associated with the endpoint of the secure channel is extracted 306 from the received certificate. When desired, the received certificate may be verified based on a digital signature contained therein, such as by obtaining a public key from a trusted certificate authority and verifying the signature based on the obtained public key.

A transcript is generated 308 based on a method agreed upon by both endpoints of the secure channel handshake. An example of a suitable transcript is the message transcript defined in the TLS protocol. Alternatively, the transcript may be any desired data value which is independently reproduceable by both endpoints of the secure channel handshake.

Next an attestation public key *Dₐ* is computed 310 based on the extracted public key *D*, a pre-defined reference hash *hᵣ*, and a group generator point *P*. The pre-defined reference hash represents a hash of known good attestation measurements. When the attestation hash generated by the client endpoint matches the known good reference hash, integrity of the client endpoint can be trusted. The pre-defined reference hash *hᵣ* may be stored locally, such as in a database or other suitable data store. Alternatively, the pre-defined reference hash *hᵣ* may be obtained from a trusted source such as a trusted authority accessible over a computer network.

The attestation public key *Dₐ* is a sub-public key corresponding to an additive sub-key pair as described above. Recall that the extracted public key equals the device private key times the group generator point *D* = *dP.* The attestation public key *Dₐ* is computed by multiplying the group generator point by the reference hash *hᵣP* and adding the result to the extracted public key *D* modulo the order n of the group generator point *P*, which may be expressed in equation form as: *Dₐ* = (*dP + hᵣP*)%*n.*

The attestation signature may be validated 312 based on the attestation public key *Dₐ* and the generated transcript. When a check 314 of the attestation signature is valid, the endpoints continue 316 setting up the secure channel. When the check 314 of the attestation signature attestation signature fails, the handshake is terminated and the secure channel is not set up 320.

In certain embodiments it may be advantageous to maintain multiple reference hashes for a single endpoint. When multiple reference hashes are available, the method 300 checks for additional reference hashes 318 before failing 320 the secure channel handshake. If additional reference hashes are available, the method 300 repeats 322 computation of the public key 310 and validation 312 of the attestation signature until the attestation signature is successfully validated or all available reference hashes have been tried.

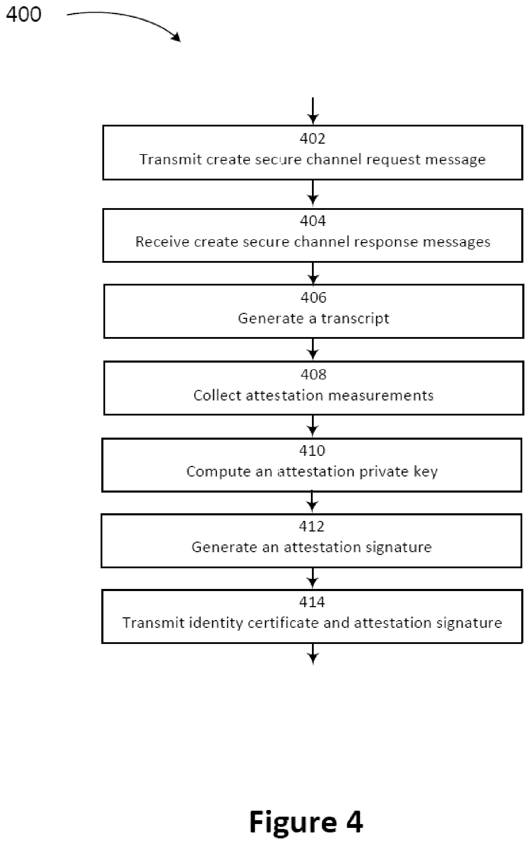

Figure 4 illustrates a flowchart depicting an exemplary method 400 for augmenting the client side of a secure channel handshake with attestation incorporating aspects of the disclosed embodiments. The exemplary method 400 is appropriate for including remote attestation in secure channel handshakes and allows remote attestation to be added to standard secure channel protocols, such as TLS, without changing the message structure and without modification of existing implementations. The disclosed embodiments facilitate easy addition of remote attestation to off the shelf software implementations, such as implementations available in standard images, images offered by cloud data centers or images available on mobile communications apparatus.

The exemplary method 400, which may also be referred to as a secure channel handshake, begins by transmitting 402 a request to create a secure channel. The create secure channel request may be transmitted for example from a client endpoint to a server endpoint such as an endpoint that is listening for connection requests on a computer network. An example of a suitable create secure channel request is the ClientHello message defined in the TLS protocol.

The server responds by sending one or more create secure channel response messages which are received 404 by the client endpoint. The one or more create secure channel response messages may include messages such as a ServerHello message, Encrypted Extensions, a CertificateRequest, a Certificate message, a Certificate Verify message, and a Finished message, such as those messages described above and defined by the TLS protocols.

A transcript is generated 406 based on information known to both the client and server endpoints of the secure channel being established. An example of a suitable transcript is the transcript defined by the TLS protocol, which is based on a running hash of messages exchanged during the handshake.

One or more attestation measurements are collected 408, where the one or more attestation measurements represent a current state of a communications apparatus. As used herein the term "communications apparatus" refers to any computerized device capable of communicating over a wired or wireless network. These measurements represent a current state of the computing apparatus on which the endpoint's application code is executing and may include any appropriate measurements useful for establishing integrity of the endpoint. The attestation measurements may include information such as a secure boot state, boot image hashes, kernel hash, a hash of the TLS endpoint application's binary code, and other similar security relevant metrics. Optionally, the attestation measurements may be collected 408 within a secure execution environment or by a trusted application executing in a trusted execution environment.

Computation 410 of the attestation private key combines the device private key with attestation information to form an additive private sub-key. Incorporating attestation measurements into the attestation private key, allows signatures created with the attestation private key to be used to ensure integrity of the client endpoint's platform. Any suitable private key may be advantageously employed as the device private key such as a private key associated with the endpoint's platform, a private key associated with the endpoint's application code, a key associated with hardware on which the endpoint's application code is executing, or other appropriate private key as desired. The device private key may be any type of private key, such as an ECDSA private key or a private key derived from any suitable DLP based cryptographic system that supports creation of additive sub-keys.

Suitable attestation information may include the collected attestation measurements or a hash of the collected attestation measurements. The attestation private key is an additive private sub-key which may be formed by adding a hash of the attestation measurements with the device private key modulo an order of the group generation point. The corresponding attestation public key is computed by multiplying the group generator point by the attestation private key.

An attestation signature is generated 412 by signing the transcript with the attestation private key. As discussed above, validation of the attestation signature ensures that the endpoint is in possession of the device private key and that integrity of the endpoint has not been compromised.

The endpoint's identity certificate and the attestation signature are then transmitted 141 to a server endpoint as part of a secure channel handshake. The identity certificate may be any suitable form of digital certificate that employs a digital signature to bind an identity of an endpoint with a public key of an endpoint. The public key may for example be a device public key corresponding to the device private key on which computation of the attestation private key was based. The identity certificate is beneficially signed by a trusted certificate authority thereby allowing the identity certificate to be validated based on any appropriately trusted private key infrastructure (PKI).

Optionally, the identity certificate may further include one or more reference hashes configured to provide attestation information about the client endpoint. The included one or more reference hashes may be employed by a server endpoint when verifying the attestation signature.

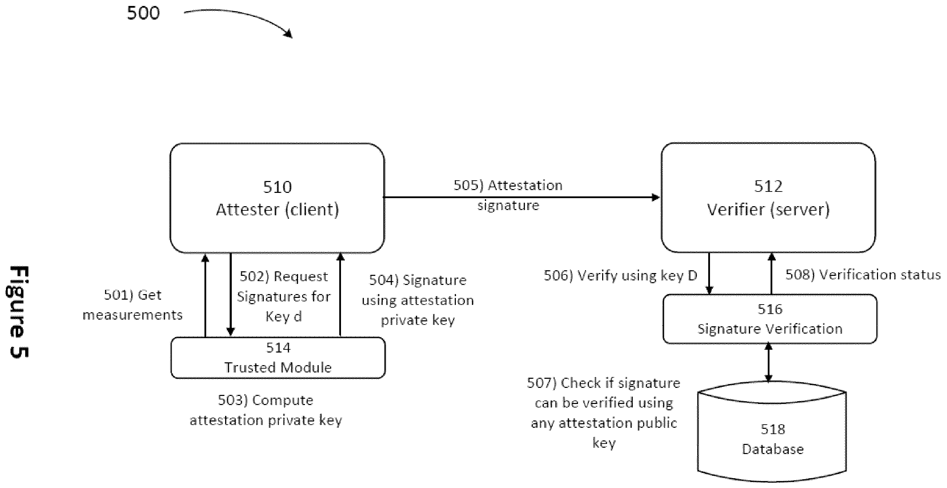

Figure 5 illustrates a block diagram of an exemplary system 500 configured to augment secure channel handshakes with attestation incorporating aspects of the disclosed embodiments. In the exemplary embodiment illustrated by the system 500, a client endpoint, also referred to as an attester 510, initiates a secure channel handshake with a server endpoint, also referred to as a verifier 512. As used herein the term "attester" refers to an entity in a remote attestation scheme that is providing attestation evidence, and the term "verifier" refers to an entity in the remote attestation scheme that examines the provided attestation evidence to verify integrity of the attester.

In certain embodiments, the attester may include a trusted module 514 configured to provide a secure execution environment, where cryptographic operations and collection of attestation measurements may be performed in a trusted manner. The trusted module, also referred to herein as a secure execution environment, may be any suitable form of secure execution environment, including, but not limited to, a trusted execution environment (TEE), a trusted application (TA), a secure enclave, a trusted platform module (TPM) a trusted bootloader, or other suitable secure component. When desired the trusted module 514 may include a hardware security module (HSM) or software based HSM configured to protect confidential key material and cryptographic operations.

When desired, the verifier may include a signature verification component 516 configured to protect confidential key material and cryptographic operations. The signature verification module 516 may be any suitable secure component such as but not limited to a trusted execution environment (TEE), a trusted application (TA), a secure enclave, a trusted platform module (TPM) a trusted bootloader, or other suitable secure component. When desired the signature verification component 516 may include a hardware security module (HSM) or software based HSM configured to protect confidential key material and cryptographic operations

A database 518 or other appropriate data store may be included in the server endpoint 512 to store reference hashes. Optionally, the database 518 may include multiple reference hashes for a single endpoint, or when desired, may include reference hashes corresponding to multiple endpoints.

Remote attestation may be added to a secure channel handshake by collecting 501 attestation measurements from the endpoint. The attestation measurements may include any desired values useful for ensuring integrity of the endpoint device's platform, such as a secure boot state, boot image hashes, kernel hash, a hash of the TLS endpoint application's binary code, or other suitable security relevant metrics.

The attester 510 requests signing 502 of a transcript or other appropriate data value based on a device private key *d.* The trusted module 514 computes 503 an attestation private key based on the device private key *d* the attestation measurements. An attestation signature is then generated 504 by signing the transcript or other appropriate data value with the computed attestation private key. An example of an appropriate data value is transcript defined in the TLS protocol.

Once the attestation signature has been generated 504, the attestation signature is transmitted 505 to the server endpoint 512. Transmission 505 of the attestation signature may be accomplished by including the attestation signature in a handshake message such as the Certificate Verify message as defined by the TLS protocol.

After receiving 505 the attestation signature, the verifier 512 sends 506 the attestation signature along with the client endpoint's public key to the signature verification module 516 where it may be verified based on the endpoint's public key and a pre-determined reference hash. The pre-determined reference hash corresponds to a known-good set of attestation measurements of the client endpoint 510 and may be stored in a database 518 or other suitable data store within the verifier. Optionally, the pre-determined reference hash may be retrieved from a trusted authority when needed by the verifier 512.

The signature verification module 516 computes an attestation public key by adding the endpoint's public key and the pre-determined reference hash modulo an order of the group generator point. The attestation public key is then used to verify the attestation signature. In embodiments where a plurality of pre-determined reference hashes is available for the endpoint 510, the signature verification module 516 may be configured to attempt verification of the attestation signature based on each of the pre-determined reference hashes. When any one of the pre-determined reference hashes results in an attestation key that produces a successful signature verification, integrity of the endpoint has not been compromised and the handshake may continue.

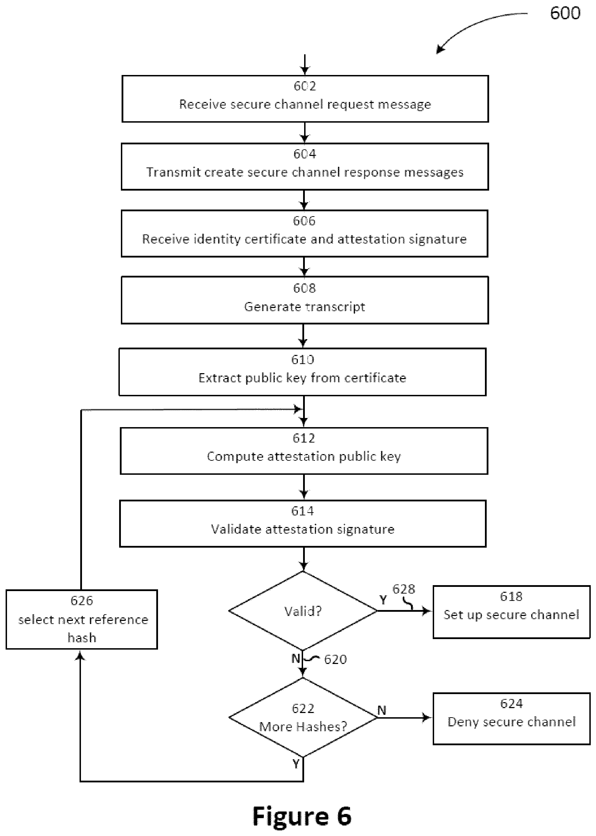

Figure 6 illustrates a flowchart of an exemplary method 600 for augmenting the server side of a secure channel handshake with attestation incorporating aspects of the disclosed embodiments. The exemplary method 600 of the disclosed embodiments facilitates incorporation of remote attestation information into standardized secure channel protocols without modification of predefined message formats and without modification of standard secure channel implementations.

A server endpoint does not initiate creation of a secure connection, it instead listens for incoming connection requests. The secure channel handshake begins when the server endpoint receives 602 a create secure channel request message. The request for creation of a secure channel may have been sent over a computer network by any appropriate client endpoint. The requesting client endpoint is validated by the secure channel handshake before a secure channel is established. The create secure channel message may be any desired type of secure channel request message such as the ClientHello message used in a TLS handshake.

In response to receiving 602, the create secure channel request message, the server transmits 604 one or more create secure channel response messages. In one embodiment, the transmitted 602 response messages include a ServerHello message, an EncryptedExtensions message, a CertificateRequest message, a Certificate message, a Certificate Verify message, and a Finished message, such as those messages defined by a TLS protocol handshake. Alternatively, any suitable secure channel handshake messages may be transmitted as desired.

An identity certificate and an attestation signature are received 606 by the server endpoint. The identity certificate may be any suitable digital certificate configured to bind an identity of the client endpoint to a public key of the client endpoint. The identity certificate may be signed by a trusted certificate authority thereby providing assurances that the client endpoint and corresponding public key may be trusted by the server endpoint. When desired the identity certificate may include additional information, such as one or more reference hashes corresponding to known good attestation measurements associated with the client endpoint.

The received attestation signature is produced by the client and represents a digital signature over a data value known to both endpoints of the secure channel handshake. For example, a suitable data value may be a transcript such as the transcript defined in the TLS protocol. The attestation signature is generated by signing the data value with an attestation private key, such as the attestation private key described above and with reference to Figure 1.

A transcript is generated 608 where the transcript is based on one or more of the create secure channel request message and the one or more create secure channel response messages. Any appropriate data value known to both endpoints of the secure channel handshake may be advantageously employed as the transcript, such as the transcript defined by the TLS protocol.

A public key corresponding to the client endpoints private key is extracted 610 from the received identity certificate.

An attestation public key is computed 612 as described above and with reference to Figure 3, based on the extracted public key and a pre-defined reference hash. The pre-defined reference hash corresponds to known good attestation information associated with the client endpoint, and may be stored locally within the server endpoint or may, when desired, be obtained from an authority trusted to provide appropriate reference hashes.

Validation 614 of the attestation signature is then accomplished based on the attestation public key. Validation 614 may be accomplished for example by using the computed attestation public key to decrypt the received attestation signature and comparing the decrypted data to the reference hash. When the validation is successful, the secure channel handshake continues and the secure channel is set up 618. When the validation fails, the secure channel is not set up and the method continues 620.

In certain embodiments, multiple reference hashes are maintained for a given client endpoint, and when validation of the attestation signature fails, the exemplary method 600 checks 622 to see if additional reference hashes are available. When no additional references are available, the secure channel handshake fails 624 and the secure channel is not set up.

When additional reference hashes are available, the next reference hash is selected 626 and computation 612 of a corresponding attestation public key and validation 614 of the attestation signature is repeated for each available reference hash. When a reference hash results in a successful attestation signature validation 628, the secure channel handshake continues 618.

As software is upgraded and hardware platforms change, it may become necessary to update the reference hashes to reflect changes in the attestation measurements. Maintenance and distribution of reliable reference hashes is important to ensure integrity of the many endpoints exposed to the internet. To facilitate the availability of reference hashes a validation authority may be set up to provide a reliable source for reference hashes. An endpoint may access this validation authority at regular intervals or as needed to maintain its local store of pre-defined reference hashes. Optionally, the reference hashes may be incorporated into identity certificates generated by a trusted certificate authority. This allows an endpoint to distribute trusted reference hashes along with its identity certificate. Further, it is expressly intended that all combinations of those elements, which perform substantially the same function in substantially the same way to achieve the same results, are within the scope of the invention. Moreover, it should be recognized that structures and/or elements shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. An apparatus (100) comprising a processor (102) communicatively coupled with a memory (104), wherein the memory (104) comprises program instructions that when executed by the processor (102) cause the apparatus (100) to:
transmit a create secure channel request message (122) over a computer network (170);
receive one or more create secure channel response messages (124, 126) from the computer network (170);
generate a transcript based on one or more of the create secure channel request message (122), and the one or more create secure channel response messages (124, 126);
collect one or more attestation measurements (*m*₁,*m*₂,...), wherein the one or more attestation measurements represent a current state of the apparatus (100);
compute an attestation private key (*dₐ*) based on a device private key (*d*) and the one or more attestation measurements (*m*₁,*m*₂,...);
generate a first attestation signature (145) by signing the transcript using the attestation private key (*dₐ*); and
transmit a first identity certificate (144) and the first attestation signature (145) over the computer network (170).

2. The apparatus (100) of claim 1 wherein execution of the program instructions by the processor (102) causes the apparatus (100) to generate the attestation private key (*dₐ*) by:
generating a measurement hash (*hₘ*) based at least in part on the attestation measurements;
generate an attestation hash (*hₐ*) based on the measurement hash (*hₘ*) and an order of a group generator point (*P*);
compute the attestation private key (*dₐ*) by adding the attestation hash (*hₐ*) to the device private key (*d*) modulo the order of the group generator point (*P*).

3. The apparatus (100) of any one of the preceding claims wherein the attestation measurements comprise one or more of a secure boot state of the apparatus (100), a hash of a boot image of the apparatus (100), and a hash of an application code of the apparatus (100).

4. The apparatus (100) of any one of the preceding claims wherein the apparatus (100) includes a rich execution environment and a secure execution environment (108), wherein the secure execution environment comprises one or more of a trusted execution environment and an HSM, and
wherein the secure execution environment (108) is configured to protect the device private key (*d*), generate the attestation private key (*dₐ*), and generate the attestation signature (145).

5. The apparatus (100) of any one of the preceding claims wherein the secure execution environment (108) comprises one or more of a software based HSM or a trusted execution environment.

6. The apparatus (100) of any one of the preceding claims wherein the one or more create secure channel response messages (124, 126) comprises a second identity certificate (138) and a second attestation signature (141), and the apparatus (100) is further configured to verify the second attestation signature (145) based on a pre-defined reference hash (*hᵣ*)*.*

7. The apparatus (100) according to claim 6 wherein the apparatus (100) is configured to verify the second attestation signature (145) by:
extracting a public key (*D*) from the second identity certificate;
generating a transcript based on one or more of the create secure channel request message (122) and the one or more create secure channel response messages (124, 126);
computing an attestation public key (*Dₐ*) based on the extracted public key (*D*), the pre-defined reference hash (*hᵣ*)*,* and the group generator point (*P*); and
validating the second attestation signature based on the attestation public key (*Dₐ*).

8. A method (400) for augmenting secure channel handshakes with attestation, the method (400) comprising:
transmitting (402) a create secure channel request message over a computer network;
receiving (404) one or more create secure channel response messages from the computer network;
generating (406) a transcript based on one or more of the create secure channel request message and the one or more create secure channel response messages;
collecting (408) one or more attestation measurements, wherein the one or more attestation measurements represent a current state of a communications apparatus;
computing (410) an attestation private key based on a device private key and the one or more attestation measurements;
generating (412) a first attestation signature by signing the transcript using the attestation private key; and
transmitting (414) a first identity certificate and the first attestation signature over the computer network.

9. The method (400) of claim 8 wherein generation (410) of the attestation private key comprises:
generating (206) a measurement hash (*hₘ*) based at least in part on the attestation measurements;
generating (208) an attestation hash based on the measurement hash and an order of a group generator point;
computing (210) the attestation private key by adding the attestation hash to the device private key modulo the order of the group generator point.

10. The method (400) of any one of claims 8 or 9 wherein the one or more create secure channel response messages comprises a second identity certificate and a second attestation signature, and the method (400) is further configured to verify the second attestation signature based on a pre-defined reference hash.

11. The method (400) of any one of the preceding claims 8 through 10 wherein verifying the second attestation signature comprises:
extracting (306) a public key from the second identity certificate;
generating (308) a transcript based on one or more of the create secure channel request message and the one or more create secure channel response messages;
computing (310) an attestation public key based on the public key and a pre-defined reference hash; and
validating (312) the second attestation signature based on the attestation public key.

12. A method (600) for augmenting secure channel handshakes with attestation, the method (600) comprising:
receiving (602) a create secure channel request message from a computer network;
transmitting (604) one or more create secure channel response messages over the computer network;
receiving (606) from the computer network an identity certificate and an attestation signature;
generating (608) a transcript based on one or more of the create secure channel request messages and the one or more create secure channel response messages;
extracting (610) a public key from the identity certificate;
computing (612) an attestation public key based on the extracted public key and a pre-defined reference hash, wherein the pre-defined reference hash represents a hash of known good attestation measurements;
validating (614) the attestation signature based on the attestation public key and the transcript; and
when the attestation signature is valid, set up (618) the secure channel; and
when the attestation signature is invalid, deny (622) the secure channel.

13. The method (600) of claim 12 wherein the pre-defined reference hash comprises one or more pre-defined reference hashes, and when the attestation signature is invalid (620) the method further comprises:
selecting (626) the next reference hash from the one or more pre-defined reference hashes; repeating (628) the compute attestation key (612), and validating the attestation signature (614) steps for each pre-defined reference hash in the one or more pre-defined reference hashes until the attestation signature is validated (618) or all pre-defined reference hashes in the one or more pre-defined reference hashes have been invalidated.

14. The method (600) of claim 12 or 13 wherein the one or more pre-defined reference hashes are embedded in a digital certificate, and the digital certificate is received from the computer network.

15. A computer program product comprising non-transitory computer program instructions that when executed by a processor (102) are configured to cause the processor (102) to perform the method according to any of claims 8 through 14.

## Patentansprüche

1. Vorrichtung (100), umfassend einen Prozessor (102), der kommunikativ mit einem Speicher (104) gekoppelt ist, wobei der Speicher (104) Programmanweisungen umfasst, die, wenn sie durch den Prozessor (102) ausgeführt werden, die Vorrichtung (100) zu Folgendem veranlassen:
Senden einer Anforderungsnachricht (122) zum Erstellen eines sicheren Kanals über ein Computernetzwerk (170);
Empfangen einer oder mehrerer Antwortnachrichten (124, 126) zum Erstellen eines sicheren Kanals von dem Computernetzwerk (170);
Erzeugen eines Protokolls basierend auf einer oder mehrerer der Anforderungsnachrichten (122) zum Erstellen eines sicheren Kanals und der einen oder den mehreren Antwortnachrichten (124, 126) zum Erstellen eines sicheren Kanals;
Erfassen einer oder mehrerer Bestätigungsmessungen (*m*₁,*m*₂,...), wobei die eine oder die mehreren Bestätigungsmessungen einen aktuellen Zustand der Vorrichtung (100) darstellen;
Berechnen eines privaten Bestätigungsschlüssels (*dₐ*) basierend auf einem privaten Einrichtungsschlüssel (*d*) und der einen oder den mehreren Bestätigungsmessungen (*m*₁,*m*₂,...);
Erzeugen einer ersten Bestätigungssignatur (145) durch Signieren des Protokolls mithilfe des privaten Bestätigungsschlüssels (*dₐ*); und
Senden eines ersten Identitätszertifikats (144) und der ersten Bestätigungssignatur (145) über das Computernetzwerk (170).

2. Vorrichtung (100) nach Anspruch 1, wobei eine Ausführung der Programmanweisungen durch den Prozessor (102) die Vorrichtung (100) dazu veranlasst, den privaten Bestätigungsschlüssel (*dₐ*) durch Folgendes zu erzeugen:
Erzeugen eines Messungs-Hashs (*hₘ*)*,* mindestens teilweise basierend auf den Bestätigungsmessungen;
Erzeugen eines Bestätigungs-Hashs (*hₐ*) basierend auf dem Messungs-Hash (*hₘ*) und einer Ordnung eines Gruppenerzeugerpunkts (*P*);
Berechnen des privaten Bestätigungsschlüssels (*dₐ*) durch Hinzufügen des Bestätigungs-Hashs (*hₐ*) zu dem privaten Einrichtungsschlüssel(*d*)-Modulo der Ordnung eines Gruppenerzeugerpunkts (*P*).

3. Vorrichtung (100) nach einem der vorhergehenden Ansprüche, wobei die Bestätigungsmessungen einen oder mehrere von einem sicheren Boot-Zustand der Vorrichtung (100), einem Hash eines Boot-Bildes der Vorrichtung (100) und einem Hash eines Anwendungscodes der Vorrichtung (100) umfassen.

4. Vorrichtung (100) nach einem der vorhergehenden Ansprüche, wobei die Vorrichtung (100) eine umfangreiche Ausführungsumgebung und eine sichere Ausführungsumgebung (108) einschließt, wobei die sichere Ausführungsumgebung eines oder mehrere von einer vertrauenswürdigen Ausführungsumgebung und einem HSM umfasst und
wobei die sichere Ausführungsumgebung (108) dazu konfiguriert ist, den privaten Einrichtungsschlüssel (*d*) zu schützen, den privaten Bestätigungsschlüssel (*dₐ*) zu erzeugen und die Bestätigungssignatur (145 ) zu erzeugen.

5. Vorrichtung (100) nach einem der vorhergehenden Ansprüche, wobei die sichere Ausführungsumgebung (108) eines oder mehrere von einem softwarebasierten HSM oder einer vertrauenswürdigen Ausführungsumgebung umfasst.

6. Vorrichtung (100) nach einem der vorhergehenden Ansprüche, wobei die eine oder die mehreren Antwortnachrichten (124, 126) zum Erstellen eines sicheren Kanals ein zweites Identitätszertifikat (138) und eine zweite Bestätigungssignatur (141) umfassen und die Vorrichtung (100) ferner dazu konfiguriert ist, die zweite Bestätigungssignatur (145) basierend auf einem vordefinierten Referenz-Hash (*hᵣ*) zu überprüfen.

7. Vorrichtung (100) nach Anspruch 6, wobei die Vorrichtung (100) dazu konfiguriert ist, die zweite Bestätigungssignatur (145) durch Folgendes zu überprüfen:
Extrahieren eines öffentlichen Schlüssels (*D*) aus dem zweiten Identitätszertifikat;
Erzeugen eines Protokolls basierend auf einer oder mehrerer der Anforderungsnachrichten (122) zum Erstellen eines sicheren Kanals und der einen oder den mehreren Antwortnachrichten (124, 126) zum Erstellen eines sicheren Kanals;
Berechnen eines öffentlichen Bestätigungsschlüssels (*Dₐ*) basierend auf dem extrahierten öffentlichen Schlüssel (*D*), dem vordefinierten Referenz-Hash (*hᵣ*) und dem Gruppenerzeugerpunkt (*P*); und
Validieren der zweiten Bestätigungssignatur basierend auf dem öffentlichen Bestätigungsschlüssel (*Dₐ*).

8. Verfahren (400) zum Erweitern von sicheren Kanalhandshakes mit Bestätigung, wobei das Verfahren (400) Folgendes umfasst:
Senden (402) einer Anforderungsnachricht zum Erstellen eines sicheren Kanals über ein Computernetzwerk;
Empfangen (404) einer oder mehrerer Antwortnachrichten zum Erstellen eines sicheren Kanals von dem Computernetzwerk;
Erzeugen (406) eines Protokolls basierend auf einer oder mehrerer der Anforderungsnachrichten zum Erstellen eines sicheren Kanals und der einen oder den mehreren Antwortnachrichten zum Erstellen eines sicheren Kanals;
Erfassen (408) einer oder mehrerer Bestätigungsmessungen, wobei die eine oder die mehreren Bestätigungsmessungen einen aktuellen Zustand einer Kommunikationsvorrichtung darstellen;
Berechnen (410) eines privaten Bestätigungsschlüssels basierend auf einem privaten Einrichtungsschlüssel und der einen oder den mehreren Bestätigungsmessungen;
Erzeugen (412) einer ersten Bestätigungssignatur durch Signieren des Protokolls mithilfe des privaten Bestätigungsschlüssels; und Senden (414) eines ersten Identitätszertifikats und der ersten Bestätigungssignatur über das Computernetzwerk.

9. Verfahren (400) nach Anspruch 8, wobei eine Erzeugung (410) des privaten Bestätigungsschlüssels Folgendes umfasst:
Erzeugen (206) eines Messungs-Hashs (*hₘ*), mindestens teilweise basierend auf den Bestätigungsmessungen;
Erzeugen (208) eines Bestätigungs-Hashs basierend auf dem Messungs-Hash und einer Ordnung eines Gruppenerzeugerpunkts;
Berechnen (210) des privaten Bestätigungsschlüssels durch Hinzufügen des Bestätigungs-Hashs zu dem privaten Einrichtungsschlüssel-Modulo der Ordnung eines Gruppenerzeugerpunkts.

10. Verfahren (400) nach einem der Ansprüche 8 oder 9, wobei die eine oder die mehreren Antwortnachrichten zum Erstellen eines sicheren Kanals ein zweites Identitätszertifikat und eine zweite Bestätigungssignatur umfassen und das Verfahren (400) ferner dazu konfiguriert ist, die zweite Bestätigungssignatur basierend auf einem vordefinierten Referenz-Hash zu überprüfen.

11. Verfahren (400) nach einem der vorhergehenden Ansprüche 8 bis 10, wobei ein Überprüfen der zweiten Bestätigungssignatur Folgendes umfasst:
Extrahieren (306) eines öffentlichen Schlüssels aus dem zweiten Identitätszertifikat;
Erzeugen (308) eines Protokolls basierend auf einer oder mehrerer der Anforderungsnachrichten zum Erstellen eines sicheren Kanals und der einen oder den mehreren Antwortnachrichten zum Erstellen eines sicheren Kanals;
Berechnen (310) eines öffentlichen Bestätigungsschlüssels basierend auf dem öffentlichen Schlüssel und einem vordefinierten Referenz-Hash; und
Validieren (312) der zweiten Bestätigungssignatur basierend auf dem öffentlichen Bestätigungsschlüssel.

12. Verfahren (600) zum Erweitern von sicheren Kanalhandshakes mit Bestätigung, wobei das Verfahren (600) Folgendes umfasst:
Empfangen (602) einer Anforderungsnachricht zum Erstellen eines sicheren Kanals von einem Computernetzwerk;
Senden (604) einer oder mehrerer Antwortnachrichten zum Erstellen eines sicheren Kanals über das Computernetzwerk;
Empfangen (606) eines Identitätszertifikats und einer Bestätigungssignatur von dem Computernetzwerk;
Erzeugen (608) eines Protokolls basierend auf einer oder mehrerer der Anforderungsnachrichten zum Erstellen eines sicheren Kanals und der einen oder den mehreren Antwortnachrichten zum Erstellen eines sicheren Kanals;
Extrahieren (610) eines öffentlichen Schlüssels aus dem Identitätszertifikat;
Berechnen (612) eines öffentlichen Bestätigungsschlüssels basierend auf dem extrahierten öffentlichen Schlüssel und einem vordefinierten Referenz-Hash, wobei der vordefinierte Referenz-Hash einen Hash bekannter guter Bestätigungsmessungen darstellt; Validieren (614) der Bestätigungssignatur basierend auf dem öffentlichen Bestätigungsschlüssel und dem Protokoll; und
wenn die Bestätigungssignatur gültig ist, Einrichten (618) des sicheren Kanals; und
wenn die Bestätigungssignatur ungültig ist, Ablehnen (622) des sicheren Kanals.

13. Verfahren (600) nach Anspruch 12, wobei der vordefinierte Referenz-Hash einen oder mehrere vordefinierte Referenz-Hashs umfasst, und wenn die Bestätigungssignatur ungültig (620) ist, das Verfahren ferner Folgendes umfasst:
Auswählen (626) des nächsten Referenz-Hashs aus dem einen oder den mehreren vordefinierten Referenz-Hashs; Wiederholen (628) der Schritte des Berechnens des Bestätigungsschlüssels (612) und Validierens der Bestätigungssignatur (614) für jeden vordefinierten Referenz-Hash in dem einen oder den mehreren vordefinierten Referenz-Hashs, bis die Bestätigungssignatur validiert (618) ist oder alle vordefinierten Referenz-Hashs in dem einen oder mehreren vordefinierten Referenz-Hashs für ungültig erklärt wurden.

14. Verfahren (600) nach Anspruch 12 oder 13, wobei der eine oder die mehreren vordefinierten Referenz-Hashs in ein digitales Zertifikat eingebettet sind und das digitale Zertifikat von dem Computernetzwerk empfangen wird.

15. Computerprogrammprodukt, umfassend nichttransitorische Computerprogrammanweisungen, die, wenn sie durch einem Prozessor (102) ausgeführt werden, dazu konfiguriert sind, den Prozessor (102) dazu zu veranlassen, das Verfahren nach einem der Ansprüche 8 bis 14 durchzuführen.

## Revendications

1. Appareil (100) comprenant un processeur (102) relié en communication à une mémoire (104), dans lequel la mémoire (104) comprend des instructions de programme qui, lorsqu'elles sont exécutées par le processeur (102), amènent l'appareil (100) à :
transmettre un message de demande de création de canal sécurisé (122) sur un réseau informatique (170) ;
recevoir un ou plusieurs messages de réponse de création de canal sécurisé (124, 126) en provenance du réseau informatique (170) ;
générer une transcription sur la base de l'un ou plusieurs du message de demande de création de canal sécurisé (122) et des un ou plusieurs messages de réponse de création de canal sécurisé (124, 126) ;
collecter une ou plusieurs mesures d'attestation (*m*₁,*m*₂,...), dans lequel les une ou plusieurs mesures d'attestation représentent un état actuel de l'appareil (100) ;
calculer une clé privée d'attestation (*dₐ*) sur la base d'une clé privée de dispositif (*d*) et des une ou plusieurs mesures d'attestation (*m*₁,*m*₂,...) ;
générer une première signature d'attestation (145) par la signature de la transcription à l'aide de la clé privée d'attestation (*dₐ*) ; et
transmettre un premier certificat d'identité (144) et la première signature d'attestation (145) sur le réseau informatique (170).

2. Appareil (100) selon la revendication 1, dans lequel l'exécution des instructions de programme par le processeur (102) amène l'appareil (100) à générer la clé privée d'attestation (*dₐ*) par :
génération d'un hachage de mesure (*hₘ*) sur la base au moins en partie des mesures d'attestation ;
génération d'un hachage d'attestation (*hₐ*) sur la base du hachage de mesure (*hₘ*) et d'un ordre d'un point générateur de groupe (*P*) ;
calcul de la clé privée d'attestation (*dₐ*) en ajoutant le hachage d'attestation (*hₐ*) à la clé privée de dispositif (*d*) modulo l'ordre du point générateur de groupe (*P*).

3. Appareil (100) selon l'une quelconque des revendications précédentes, dans lequel les mesures d'attestation comprennent l'un ou plusieurs d'un état de démarrage sécurisé de l'appareil (100), d'un hachage d'une image de démarrage de l'appareil (100) et d'un hachage d'un code d'application de l'appareil (100).

4. Appareil (100) selon l'une quelconque des revendications précédentes, dans lequel l'appareil (100) comporte un environnement d'exécution riche et un environnement d'exécution sécurisé (108), dans lequel l'environnement d'exécution sécurisé comprend l'un ou plusieurs d'un environnement d'exécution de confiance et d'un HSM, et
dans lequel l'environnement d'exécution sécurisé (108) est configuré pour protéger la clé privée de dispositif (*d*), générer la clé privée d'attestation (*dₐ*) et générer la signature d'attestation (145).

5. Appareil (100) selon l'une quelconque des revendications précédentes, dans lequel l'environnement d'exécution sécurisé (108) comprend l'un ou plusieurs d'un HSM sur la base d'un logiciel ou d'un environnement d'exécution de confiance.

6. Appareil (100) selon l'une quelconque des revendications précédentes, dans lequel les un ou plusieurs messages de réponse de création de canal sécurisé (124, 126) comprennent un second certificat d'identité (138) et une seconde signature d'attestation (141), et l'appareil (100) est en outre configuré pour vérifier la seconde signature d'attestation (145) sur la base d'un hachage de référence prédéfini (*hᵣ*).

7. Appareil (100) selon la revendication 6, dans lequel l'appareil (100) est configuré pour vérifier la seconde signature d'attestation (145) par :
extraction d'une clé publique (*D*) à partir du second certificat d'identité ;
génération d'une transcription sur la base de l'un ou plusieurs du message de demande de création de canal sécurisé (122) et des un ou plusieurs messages de réponse de création de canal sécurisé (124, 126) ;
calcul d'une clé publique d'attestation (*Dₐ*) sur la base de la clé publique extraite (*D*), du hachage de référence prédéfini (*hᵣ*) et du point générateur de groupe (*P*) ; et
validation de la seconde signature d'attestation sur la base de la clé publique d'attestation (*Dₐ*).

8. Procédé (400) d'augmentation d'établissement de liaison de canal sécurité avec attestation, le procédé (400) comprenant :
la transmission (402) d'un message de demande de création de canal sécurisé sur un réseau informatique ;
la réception (404) d'un ou de plusieurs messages de réponse de création de canal sécurisé en provenance du réseau informatique ;
la génération (406) d'une transcription sur la base de l'un ou plusieurs du message de demande de création de canal sécurisé et des un ou plusieurs messages de réponse de création de canal sécurisé ;
la collecte (408) d'une ou de plusieurs mesures d'attestation, dans lequel les une ou plusieurs mesures d'attestation représentent un état actuel d'un appareil de communication ;
le calcul (410) d'une clé privée d'attestation sur la base d'une clé privée de dispositif et des une ou plusieurs mesures d'attestation ;
la génération (412) d'une première signature d'attestation par la signature de la transcription à l'aide de la clé privée d'attestation ; et
la transmission (414) d'un premier certificat d'identité et de la première signature d'attestation sur le réseau informatique.

9. Procédé (400) selon la revendication 8, dans lequel la génération (410) de la clé privée d'attestation comprend :
la génération (206) d'un hachage de mesure (*hₘ*) sur la base au moins en partie des mesures d'attestation ;
la génération (208) d'un hachage d'attestation sur la base du hachage de mesure et d'un ordre d'un point générateur de groupe ; le calcul (210) de la clé privée d'attestation en ajoutant le hachage d'attestation à la clé privée de dispositif modulo l'ordre du point générateur de groupe.

10. Procédé (400) selon l'une quelconque des revendications 8 ou 9, dans lequel les un ou plusieurs messages de réponse de création de canal sécurisé comprennent un second certificat d'identité et une seconde signature d'attestation, et le procédé (400) est en outre configuré pour vérifier la seconde signature d'attestation sur la base d'un hachage de référence prédéfini.

11. Procédé (400) selon l'une quelconque des revendications précédentes 8 à 10, dans lequel la vérification de la seconde signature d'attestation comprend :
l'extraction (306) d'une clé publique à partir du second certificat d'identité ;
la génération (308) d'une transcription sur la base de l'un ou plusieurs du message de demande de création de canal sécurisé et des un ou plusieurs messages de réponse de création de canal sécurisé ;
le calcul (310) d'une clé publique d'attestation sur la base de la clé publique et d'un hachage de référence prédéfini ; et
la validation (312) de la seconde signature d'attestation sur la base de la clé publique d'attestation.

12. Procédé (600) d'augmentation d'établissement de liaison de canal sécurisé avec attestation, le procédé (600) comprenant :
la réception (602) d'un message de demande de création de canal sécurisé en provenance d'un réseau informatique ;
la transmission (604) d'un ou de plusieurs messages de réponse de création de canal sécurisé sur le réseau informatique ;
la réception (606), en provenance du réseau informatique, d'un certificat d'identité et d'une signature d'attestation ;
la génération (608) d'une transcription sur la base de l'un ou plusieurs des messages de demande de création de canal sécurisé et des un ou plusieurs messages de réponse de création de canal sécurisé ;
l'extraction (610) d'une clé publique à partir du certificat d'identité ;
le calcul (612) d'une clé publique d'attestation sur la base de la clé publique extraite et d'un hachage de référence prédéfini, dans lequel le hachage de référence prédéfini représente un hachage de mesures d'attestation dont la validité est confirmée ;
la validation (614) de la signature d'attestation sur la base de la clé publique d'attestation et de la transcription ; et
lorsque la signature d'attestation est valide, l'établissement (618) du canal sécurisé ; et
lorsque la signature d'attestation n'est pas valide, le refus (622) de l'établissement du canal sécurisé.

13. Procédé (600) selon la revendication 12, dans lequel le hachage de référence prédéfini comprend un ou plusieurs hachages de référence prédéfinis, et lorsque la signature d'attestation n'est pas valide (620), le procédé comprend en outre :
la sélection (626) du hachage de référence suivant parmi les un ou plusieurs hachages de référence prédéfinis ; la répétition (628) des étapes de calcul de la clé d'attestation (612) et de validation de la signature d'attestation (614) pour chaque hachage de référence prédéfini dans les un ou plusieurs hachages de référence prédéfinis jusqu'à ce que la signature d'attestation soit validée (618) ou que tous les hachages de référence prédéfinis dans les un ou plusieurs hachages de référence prédéfinis aient été invalidés.

14. Procédé (600) selon la revendication 12 ou 13, dans lequel les un ou plusieurs hachages de référence prédéfinis sont intégrés dans un certificat numérique, et le certificat numérique est reçu en provenance du réseau informatique.

15. Produit de programme informatique comprenant des instructions de programme informatique non transitoire qui, lorsqu'elles sont exécutées par un processeur (102), sont configurées pour amener le processeur (102) à réaliser le procédé selon l'une quelconque des revendications 8 à 14.
